# EUROPÄISCHE PATENTSCHRIFT

(11) **EP 2 653 025 B1**
(45) Veröffentlichungstag und Bekanntmachung des Hinweises auf die Patenterteilung: **08.04.2015**
(21) Anmeldenummer: 13152309.4
(22) Anmeldetag: 23.01.2013
(51) Int. Cl.: A01F 15/10

(54) **Schneidvorrichtung für landwirtschaftliches Erntegut**
Cutting device for agricultural crops
Dispositif de coupe pour récolte agricole

(30) Priorität: 18.04.2012 DE 102012007634
(43) Veröffentlichungstag der Anmeldung: 23.10.2013
(73) Patentinhaber: Usines Claas France S.A.S, 57140 Metz (FR)
(72) Erfinder: Birkhofer, Stefan, 78333 Stocknach (DE); Arnould, Cyrille, 57645 Montoy-Flanville (FR)
(74) Vertreter: Belda, Stefan Johannes

(56) Entgegenhaltungen:
- EP-A1- 2 110 014
- EP-A2- 1 609 354
- DE-A1- 4 302 199
- DE-C1- 19 805 854

## Beschreibung

Die Erfindung betrifft eine Schneidvorrichtung für landwirtschaftliches Erntegut gemäß dem Oberbegriff des Anspruchs 1.

Landwirtschaftliche Ballenpressen oder Ladewagen sind oftmals mit einer Schneidvorrichtung - auch "Schneidwerk" genannt - für der Maschine zugeführtes Halm- und/oder Blattgut (im Folgenden vereinfacht: "Erntegut") ausgestattet, um dieses zu unterschiedlichen Zwecken zu zerkleinern. Auch andere landwirtschaftliche Erntemaschinen können mit einer solchen Schneidvorrichtung ausgestattet sein.

Die Schneidvorrichtung ist dabei jeweils in einem vom Erntegut durchströmten Kanal der Ballenpresse, des Ladewagens oder sonstigen landwirtschaftlichen Maschine so angeordnet, dass das Erntegut auf eine in den Kanal hineinragende Anzahl feststehender Messer zu gefördert wird, um in Kontakt mit den Messerkanten geschnitten zu werden. Im Fall von Ballenpressen und Ladewagen wird die Förderung des Ernteguts im Wirkungsbereich der Messer insbesondere durch einen Rotor bewirkt, der sich um eine quer zur Gutstromrichtung liegende Achse dreht und in Axialrichtung mit einer Vielzahl von Rotorsternen ausgestattet ist. Die Rotorsterne sind in der Regel leicht verdreht zueinander auf der Achse montiert, um eine weitestgehend kontinuierliche Förderung des Ernteguts sowie gleichmäßige Belastung des zugehörigen Antriebsstrangs zu erzielen.

In Bezug auf den durchströmten Erntegutkanal weisen derartige Schneidvorrichtungen eine Vielzahl in Reihe nebeneinander angeordneter Messer auf, wobei die Anzahl nebeneinander in den Erntegutkanal ragender Messer die Anzahl wirksamer Schnittkanten und damit eine erzielbare Schnittlänge des Ernteguts vorgibt. Es ist allgemein wünschenswert, unterschiedliche Messeranzahlen verwenden zu können, um sich dem jeweiligen Einsatzzweck bzw. den Erntebedingungen anzupassen. Zum Schutz der Messer vor Beschädigungen durch Steine oder sonstige allgemein nicht zerkleinerbare Partikel und zur Ermöglichung einer Auswahl einer gewünschten Messeranzahl ist es üblich, die Messer derart schwenkbar gegenüber einem Rahmen der Schneidvorrichtung zu lagern, dass sich jedes Messer zwischen einer Außerbetriebsposition und einer Betriebsposition verschwenken lässt. In der Außerbetriebsposition befindet sich das Messer dagegen in einer Stellung, in der es aus dem Erntegutkanal weitestgehend zurückgezogen ist, das Erntegut also nicht schneidet. In der Betriebsposition befindet sich das Messer dabei in einer Stellung, in der es so in den Erntegutkanal hineinragt, dass vorbeiströmendes Erntegut in Zusammenwirkung mit dem Messer zerkleinert wird. Zum Spannen und anschließenden Halten des Messers in der Betriebsposition ist jedem Messer eine Spanneinheit zugeordnet, die beispielsweise über ein Federelement verfügt. Eine gemeinsame, bewegbare Stelleinrichtung dient dazu, die Spanneinheiten die Messer zusammen von der Außerbetriebsposition in die Betriebsposition zu schwenken. Angesichts der größer werdenden Anzahl verbauter Messer in Schneidvorrichtungen sowie der hohen wirkenden Kräfte stellt die Schaltung der Messer mechanisch eine Herausforderung dar.

Ganz allgemein sei auf die EP 1 609 354 A1 verwiesen, die eine Schneidvorrichtung der in Rede stehenden Art offenbart, bei der eine Vielzahl von Messern über mit Spiralfedern versehenen Spanneinheiten in der Betriebsposition gehalten werden. Zum Spannen dient eine sich quer über die Breite der Schneidvorrichtung erstreckende Stelleinrichtung. Abhängig von der gewünschten Messerzahl kann ein Rotor in den Stellbereich der Spanneinheiten bewegt werden, dessen Drehstellung zum Blockieren einer bestimmten Anzahl von Spiralfedern führt, so dass auch bei Bewegung der gemeinsamen Stelleinrichtung in Richtung der Messeranordnung das Messer der jeweils blockierten Spiralfeder nicht in die Betriebsposition gebracht wird. Als nachteilig ist anzusehen, dass unabhängig von der gewünschten Messerzahl stets alle Spiralfedern gespannt werden müssen. Dies erfordert insbesondere bei hohen verfügbaren Messerzahlen unnötig hohe Kräfte. Weiterhin ist ein Bewegen des Rotors erforderlich, was neben der Drehung des Rotors eine zusätzlich durchzuführende Bewegung darstellt. Die erforderliche Bewegungsfreiheit des Rotors erfordert daneben zusätzlichen Bauraum, der insbesondere im Fall von Ballenpressen in der Höhe zumeist knapp ist.

Es ist daher eine Aufgabe der vorliegenden Erfindung, eine Schneidvorrichtung der genannten Art anzugeben, die sich mit verringertem Kraftaufwand bedienen und betreiben lässt und dabei eine geringe Bauhöhe aufweist.

Die genannte Aufgabe wird gelöst durch eine Schneidvorrichtung mit den Merkmalen des Anspruchs 1. Diese zeichnet sich aus durch einen den Spanneinheiten zugeordneten gemeinsamen Auswählmechanismus, der ausgewählte Spanneinheiten von einem inaktiven Zustand, in dem diese ohne Eingriff mit der gemeinsamen Stelleinrichtung sind, in einen aktiven Zustand bewegen kann, in dem diese mit der gemeinsamen Stelleinrichtung in Eingriff stehen. Erfindungsgemäß dient der gemeinsame Auswählmechanismus also dazu, einzelne - oder sämtliche - der Spanneinheiten zwischen zwei Zuständen zu bewegen, wobei die gemeinsame Stelleinrichtung abhängig vom Zustand der Spanneinheit nur noch mit ausgewählten Spanneinheiten in Eingriff steht, somit also nur noch diese von der gemeinsamen Stelleinrichtung bewegt zu werden brauchen. Es ergibt sich vorteilhaft ein verringerter Kraftaufwand. Unterschiedliche Bauformen eines solchen Auswählmechanismus sind denkbar.

Gemäß einer vorteilhaften Ausgestaltung des Erfindungsgedankens umfasst der Auswählmechanismus eine zur Messerachse parallele Nockenwelle, die zu Kontaktabschnitten der Spanneinheiten derart beabstandet ist, dass abhängig von der Drehstellung der Nockenwelle ausgewählte Spanneinheiten bei Kontakt mit einem Nocken vom inaktiven in den aktiven Zustand ausgelenkt werden. Demzufolge dient die Nockenwelle dazu, abhängig von deren Drehstellung den Zustand, insbesondere die Lage einzelner Spanneinheiten so beeinflussen, dass diese in den und aus dem Eingriffsbereich der gemeinsamen Stelleinrichtung gebracht werden können. Kontaktiert ein Nocken der Nockenwelle einen Kontaktbereich der jeweiligen Spanneinheit, so wird die Spanneinheit aus dem inaktiven Nichteingriffszustand in den aktiven Eingriffszustand mit der Spanneinrichtung gebracht. Alternativ zu einer Nockenwelle sind andere mechanische Einrichtungen denkbar, die eine Auswahlfunktion der Spanneinheiten in dem oben genannten Sinne erfüllen.

Vorteilhaft umfasst eine Spanneinheit jeweils einen Stößel, der einen mit der Stelleinrichtung in Eingriff bringbaren Druckkopf und einen mittelbar oder unmittelbar auf das jeweilige Messer Druck übertragenden Fußabschnitt aufweist. Es handelt sich bei dem Stößel beispielsweise um ein im Wesentlichen längliches Element, dessen einerseits vorgesehener Druckkopf insbesondere eine gegenüber der gemeinsamen Stelleinrichtung zentrierende Funktion hat. Ein sicherer Eingriff lässt sich damit gewährleisten. Gemäß einer vorteilhaften Weiterbildung der Vorrichtung ist der Stößel liegend und oberhalb der Nockenwelle angeordnet, so dass die Auswahl einer Spanneinheit in den aktiven Zustand bei Kontakt mit einem Nocken in Form eines Anhebens erfolgt und sich der inaktive Zustand durch schwerkraftbedingtes Absenken ergibt. Mit anderen Worten sind die den Messern zugeordneten, nebeneinander befindlichen Spanneinheiten, insbesondere deren Stößel, im Sinne eine Betts liegend über der Nockenwelle angeordnet. Aufgrund der Schwerkraftwirkung kann die Rückstellbewegung aus dem angehobenen Zustand daher vorteilhaft selbsttätig erfolgen, wenn die Spanneinheit nicht durch einen Nocken angehoben wird oder von der gemeinsamen Stelleinrichtung im angehobenen Zustand gehalten wird.

Zweckmäßigerweise ist der Stößel mittels einer zwischen Druckkopf und Fußabschnitt wirkenden Federanordnung in dessen Länge veränderlich. Durch diese Längenveränderlichkeit ist gewährleistet, dass das zugehörige Messer beispielsweise bei Überlast aufgrund von Steinen oder sonstigen nicht zerkleinerbaren Partikeln aus der Betriebsposition ausweichen kann. Die Federkraft ist dabei so gewählt, dass erforderliche Schnittkräfte erreicht werden können, jedoch vor Beschädigungen am Messer oder sonstigen Bauteilen der Vorrichtung oder der tragenden Maschine ein Ausweichen in die Außerbetriebsposition stattfindet.

Eine vorteilhafte Weiterbildung der Schneidvorrichtung sieht vor, dass im aktiven Zustand einer Spanneinheit der Druckkopf des Stößels mit einer an der Stelleinrichtung dazu komplementär ausgebildeten Mulde in Eingriff steht. Auf diese Weise ist mit einfachen Mitteln gewährleistet, dass der Druckkopf des Stößels unter Druckkontakt mit der gemeinsamen Stelleinrichtung sicher in Eingriff bleibt bzw. auch bei Bautoleranzen sicher damit in Eingriff bringbar ist.

Gemäß einer vorteilhaften Weiterbildung der Erfindung umfasst eine Spanneinheit einen drehbar gelagerten Stellhebel, dessen freies (d.h. dessen Drehlagerung abgewandtes) Ende mit dem Fußabschnitt des Stößels gekoppelt ist und mit einem rückseitigen Abschnitt des Messers in Druckkontakt bringbar ist, um dieses von der Außerbetriebsposition in die Betriebsposition zu drücken und/oder in der Betriebsposition zu halten. Demzufolge steht der Stößel vorzugsweise nicht selbst in Kontakt mit dem Messer, sondern dient ein drehbarer Stellhebel der Krafteinleitung gegenüber dem Messer. Am Stellhebel kann dazu an dessen freiem Ende vorteilhaft eine drehbare Rolle angebracht sein, die am rückseitigen Messerabschnitt abrollen kann, um das Messer zwischen der Außerbetriebsposition und der Betriebsposition (und umgekehrt) ununterbrochen zu kontaktieren. Zur Arretierung in der Betriebsposition kann im rückseitigen Abschnitt des Messers vorteilhaft eine entsprechende Kerbe ausgebildet sein, welche die Rolle im Betriebszustand teilweise aufnimmt.

Neben einer Schneidvorrichtung betrifft die Erfindung weiterhin eine Ballenpresse oder einen Ladewagen mit einer im Erntegutkanal angeordneten Schneidvorrichtung, wie zuvor beschrieben.

Die Erfindung wird im Folgenden unter Hinweis auf die beigefügten Figuren anhand eines bevorzugten Ausführungsbeispiels näher erläutert. Daraus ergeben sich auch weitere Einzelheiten und Vorteile der Erfindung. Es zeigen:
- Fig. 1: eine Ballenpresse in schematischer Seitenansicht,
- Fig. 2: eine erfindungsgemäße Schneidvorrichtung gemäß bevorzugtem Ausführungsbeispiel in perspektivischer Ansicht,
- Fig. 3: die Schneidvorrichtung in Seitenansicht, wobei ein gezeigtes Messer der Schneidvorrichtung eine Außerbetriebsposition einnimmt,
- Fig. 4: die Schneidvorrichtung in Seitenansicht, wobei ein gezeigtes Messer der Schneidvorrichtung eine Betriebsposition einnimmt.

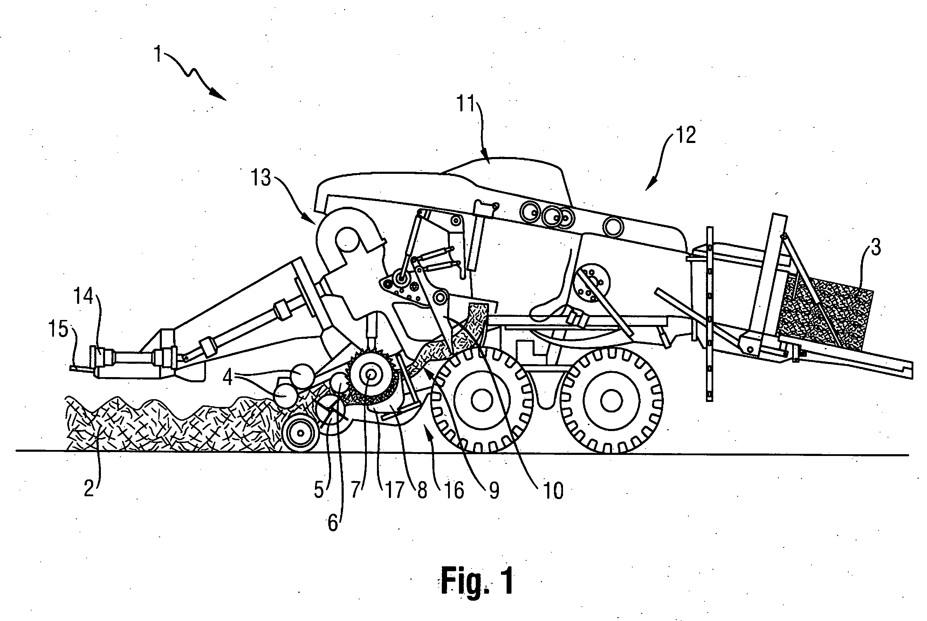

Fig. 1 zeigt eine Ballenpresse 1 in Form einer Quaderballenpresse bei der Erntefahrt in schematischer Seitenansicht. Im Erntebetrieb nimmt die Ballenpresse 1 auf dem Feldboden liegendes Erntegut 2, beispielsweise zum Schwad gelegtes Stroh auf und verarbeitet dieses zu quaderförmig gepressten und mit Bindegarn verschnürten Ballen 3, die nach Fertigstellung heckseitig aus der Ballenpresse 1 ausgeworfen werden.

Dazu nimmt die Ballenpresse 1 das Erntegut 2 mittels einer mit Zinken besetzten rotierenden Aufsammeltrommel 5 vom Boden auf, um es in Zusammenwirkung mit zwei darüberliegenden Niederhalterollen 4 den weiteren Förder- und Verarbeitungseinrichtungen der Ballenpresse 1 zuzuführen. Als nächstes wird das Erntegut 2 von einem Förderorgan 6, beispielsweise einer Querförderschnecke, von einer ursprünglichen Aufnahmebreite der Aufsammeltrommel 5 auf eine geringere Breite des Zuführkanals 9 zusammengeführt und mittels auf dem Förderorgan 6 mittig angeordneter Förderpaddel (nicht dargestellt) zum nachgelagerten (Schneid-) Rotor 7 gefördert. Der Rotor 7 weist über dessen Breite eine Vielzahl von zueinander beabstandeten Rotorsternen auf. Die Rotorsterne sind beispielsweise wendelförmig auf dem Rotor 7 angeordnet, um eine gleichmäßige Förderwirkung sowie eine gleichmäßige Belastung des zugehörigen Antriebsstrangs zu erzielen.

Unterhalb des Rotors 7 ist eine zunächst schematisch dargestellte Schneidvorrichtung 16 angeordnet. Die Schneidvorrichtung 16 weist im Wesentlichen eine Vielzahl von Messern 8 auf, die in Bezug auf den Zuführkanal 9 quer zur Förderrichtung des Ernteguts 2 nebeneinander angeordnet sind. Demzufolge ist nur ein in der Zeichnungsansicht vorderes (in Fahrtrichtung der Presse 1 gesehen linkes) Messer 8 der Schneidvorrichtung 16 zu sehen, das - wie auch die übrigen Messer 8 - um eine quer zur Gutförderrichtung verlaufende Messerachse 17 verschwenkbar ist. Jedes Messer 8 ist so zwischen einer Außerbetriebsposition, in der es nicht in den Erntegutkanal hineinragt, und einer Betriebsposition verschwenkbar, in der es in den Erntegutkanal hineinragt. Befindet sich ein Messer 8 (bzw. eine Vielzahl oder sämtliche der Messer 8) in der Betriebsposition, so wird das den Zuführkanal 9 durchströmende Erntegut 2 durch kämmende Zusammenwirkung von Rotor 7 (dessen Rotorsternen) und dem jeweiligen Messer 8 zerkleinert, insbesondere geschnitten.

Nach Passieren der Schneidvorrichtung 16 wird das Erntegut 2 von einem Sammelhübe durchführenden Raffer 10 gesammelt, der dann portionsweise eine darüberliegende Presskammer 11 befüllt. Nach dem dort stattfindenden Pressvorgang dient eine Knoteinrichtung 12 dazu, den gepressten Ballen 3 mit Bindegarn zu verschnüren, um diesen fertig zu stellen. Heckseitig der Ballenpresse 1 erfolgt anschließend der Ballenabwurf.

Frontseitig der Ballenpresse 1 befindet sich eine Zugdeichsel 15, mit der die Ballenpresse 1 von einem Zugfahrzeug wie einem Traktor (nicht dargestellt) gezogen und von diesem angetrieben wird. Zum Antrieb der Förder- und Verarbeitungseinrichtungen der Ballenpresse 1 dient eine mit dem Traktor koppel bare Hauptantriebswelle 14, die in einem Hauptgetriebe 13 mündet.

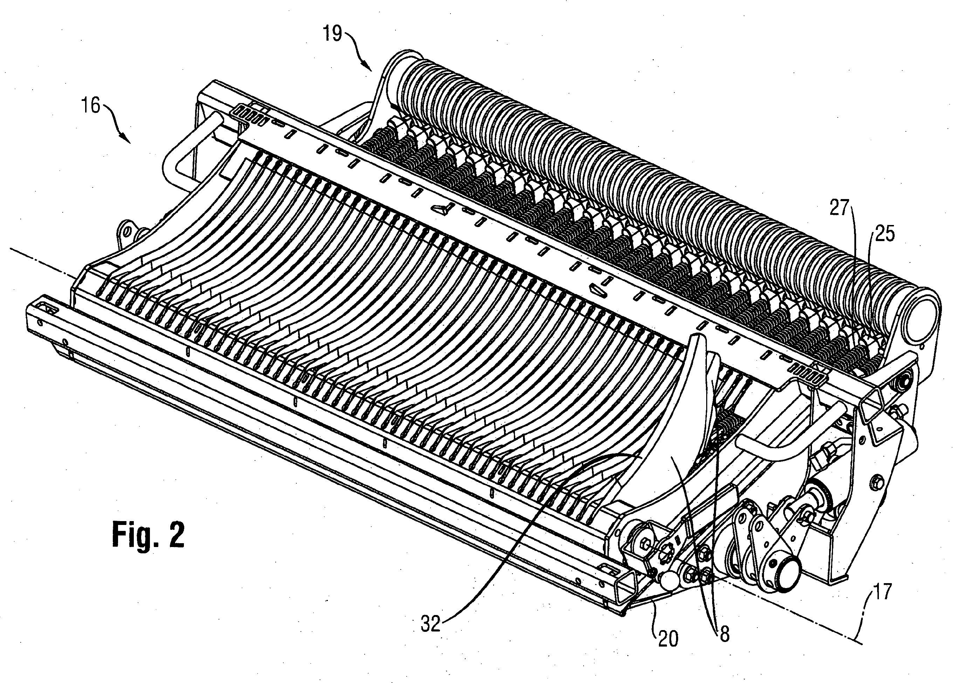

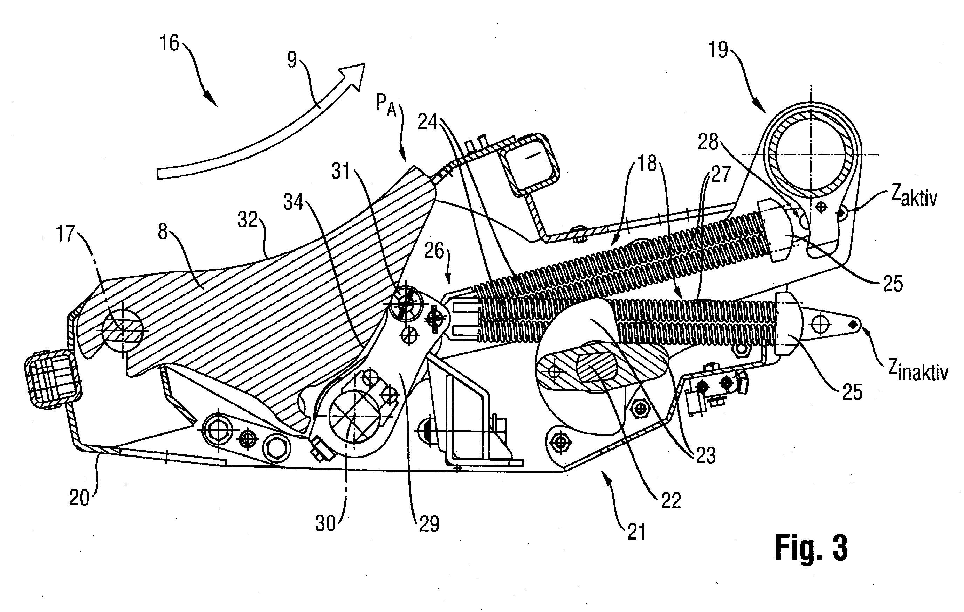

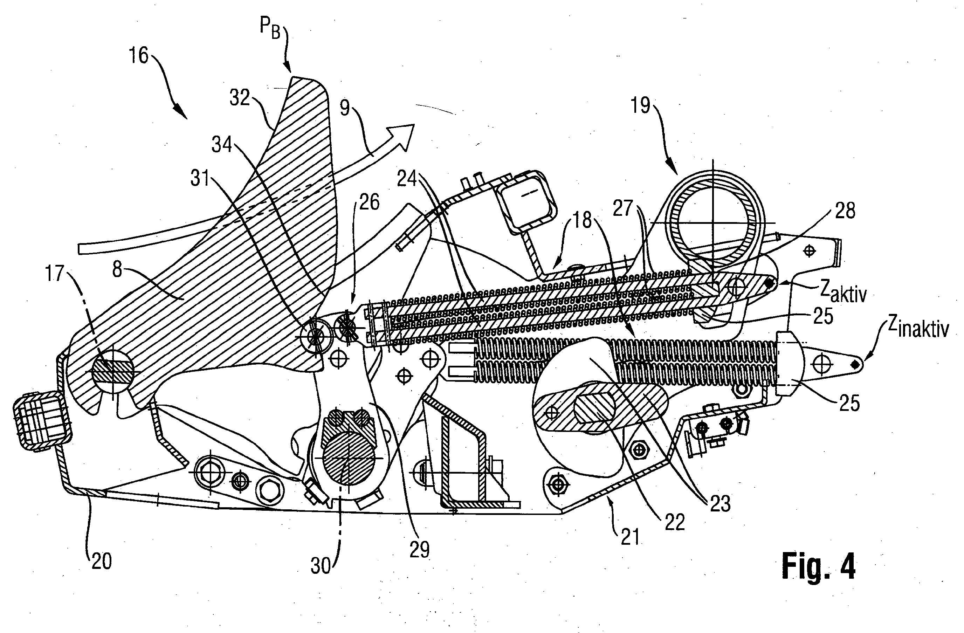

Fig. 2 zeigt nun in ein bevorzugtes Ausführungsbeispiel einer erfindungsgemäßen Schneidvorrichtung 16, die vorteilhaft in die Ballenpresse 1 gemäß Fig. 1 eingebaut sein kann, in perspektivischer Ansicht. Die Schneidvorrichtung 16 baut auf einen Rahmen 20 auf, gegenüber dem eine Vielzahl von Messern 8 um die Messerachse 17 schwenkbar gelagert sind. Die Messer 8 liegen mit nach vorn oben (bezogen auf die Einbauposition in der Ballenpresse 1 gemäß Fig. 1) weisenden Schneidkanten 32 bettartig nebeneinander in dem Rahmen 20. Gemäß Fig. 2 befindet sich die Mehrzahl der Messer 8 in einer Außerbetriebsposition, weshalb diese weitestgehend nicht sichtbar (weil versenkt) sind. Lediglich ein in der Zeichnungsansicht vorderes und ein dahinter liegendes Messer 8 sind zur Veranschaulichung aus der Außerbetriebsposition nach oben verschwenkt. Die Funktionsweise der Schneidvorrichtung 16 wird im Folgenden näher anhand der Fig. 3 und 4 erläutert. Dabei zeigen die Fig. 3 und 4 jeweils die Schneidvorrichtung 16 im seitlichen Schnitt in unterschiedlichen Zuständen.

In Fig. 3 befindet sich ein Messer 8 der Schneidvorrichtung 16 in einer Außerbetriebsposition P_{A}. In dieser Position ragt das Messer 8 nicht in den mittels Pfeil (Gutstromrichtung) angedeuteten Zuführkanal 9 hinein und ist damit nicht wirksam. Im bezogen auf die Gutstromrichtung vorderen Bereich stützt sich das Messer 8 auf der Messerachse 17 ab und ist um diese verschwenkbar. Jedem der Messer 8 ist eine Spanneinheit 18 zugeordnet, die mit einer gemeinsamen Stelleinrichtung 19 in Eingriff gebracht werden kann, um das Messer 8 von der gezeigten Außerbetriebsposition P_{A} in eine in Fig. 4 gezeigte Betriebsposition P_{B} zu verschwenken bzw. in der Betriebsposition P_{B} zu halten. Im Wesentlichen umfasst eine Spanneinheit 18 einen Stößel 24, der einen Endes mit der gemeinsamen Stelleinrichtung 19 in Eingriff bringbar ist und anderen Endes mittelbar - oder unmittelbar - Druck auf einen rückseitigen Bereich (hier: Fersenbereich) des Messers 8 ausüben kann. Im gezeigten Ausführungsbeispiel weist der Stößel 24 dazu einen endseitig abgerundeten Druckkopf 25 auf. Der abgerundete Druckkopf 25 ist in der Form einer an der gemeinsamen Stelleinrichtung 19 ausgebildeten Mulde 28 angepasst, d.h. komplementär dazu ausgebildet, so dass bei einer Bewegung der gemeinsamen Stelleinrichtung 19 in Richtung des Messers 8 der Druckkopf 25 sicher in Eingriff mit der Stelleinrichtung 19 stehen kann, nämlich wenn sich die jeweilige Spanneinheit 18 in einem aktiven Zustand Zₐₖti, befindet.

Der Druckkopf 25 ist in Längsrichtung des Stößels 24 längsverschiebbar, wobei zwei parallel angeordnete Spiralfedern 27 mit zunehmender Verschiebung des Druckkopfes 25 in Richtung eines Fußabschnitts 26 des Stößels eine zunehmende Rückstellkraft ausüben. Die so realisierte effektive Längenveränderbarkeit des Stößels 24 mittels Federanordnung (Spiralfedern 27) dient insbesondere zur Gewährleistung einer Sicherheitsabschaltung des jeweiligen Messers 8 im Überlastfall, wie beispielsweise bei Kontakt des Messers 8 mit Fremdkörpern.

Ein dem Druckkopf 25 abgewandter Fußabschnitt 26 des Stößels 24 ist im gezeigten Ausführungsbeispiel kinematisch gekoppelt mit einem Stellhebel 29, der wiederum um eine Schwenkachse 30 gegenüber dem Rahmen 20 schwenkbar ist. An dem der Schwenkachse 30 abgewandten freien Ende des Stellhebels 29 stützt sich einerseits der gelenkig verbundene Fußabschnitt 26 des Stößels 24 ab. Daneben ist an diesem freien Ende des Stellhebels 29 eine drehbare Rolle 31 angebracht, die in Rollkontakt mit einem rückseitigen Abschnitt 34 des Messers 8 steht. Der von der Rolle 31 kontaktierbare rückseitige Abschnitt 34 des Messers 8 weist einen derartigen Verlauf auf, dass in der Außerbetriebsposition P_{A} des Messers 8 die Rolle 31 von der Messerachse 17 weiter beabstandet ist als in der Betriebsposition P_{B} (vgl. Fig. 4). Der rückseitige Abschnitt 34 verläuft dazu mit sich gegenüber der Messerachse 17 veränderndem Abstand, wobei zur Vorgabe einer Betriebsposition P_{B} im Fersenbereich des Messers 8 eine die Rolle 31 teilweise aufnehmende Mulde ausgebildet ist.

In Fig. 4 befindet sich ein Messer 8 der Schneidvorrichtung 16 somit in einer Betriebsposition P_{B}. In dieser Position ragt das Messer 8 in den mittels Pfeil (Gutstromrichtung) angedeuteten Zuführkanal 9 hinein und ist damit wirksam. Über die Rolle 31, den Stellhebel 29, den Stößel 24 einschließlich Federanordnung und Druckkopf 25 übt dabei die gemeinsame Stelleinrichtung 19, die beispielsweise über (nicht dargestellte) außenseitig der Schneidvorrichtung 16 angeordnete Stellzylinder betätigbar ist, die zum Halten des Messers 8 in der Betriebsposition P_{B} erforderliche Haltekraft aus. Aufgrund der Längennachgiebigkeit des Stößels 24 ist die Möglichkeit einer Sicherheitsabschaltung des Messers 8 gewährleistet.

Zur Auswahl einer gewünschten Anzahl von Messern 8 verfügt die Schneidvorrichtung 16 erfindungsgemäß über einen den Spanneinheiten 18 zugeordneten gemeinsamen Auswählmechanismus 21. Dieser Auswählmechanismus 21 ermöglicht es, ausgewählte Spanneinheiten 18, d.h. Spanneinheiten 18, deren Messer 8 in die Betriebsposition P_{B} gebracht werden sollen, von einem inaktiven Zustand Zᵢₙₐₖₜᵢᵥ, in dem diese ohne Eingriff mit der gemeinsamen Stelleinrichtung 19 sind, in einen aktiven Zustand Zₐₖₜᵢᵥ zu bewegen, in dem diese mit der gemeinsamen Stelleinrichtung 19 in Eingriff stehen.

In den Fig. 3 und 4 sind jeweils die Spanneinheiten 18 eines vorderen Messers 8 und eines dahinter liegenden Messers 8 zumindest teilweise zu sehen. Dabei befindet sich in Fig. 3 die Spanneinheit 18 des vorderen Messers 8 im inaktiven Zustand Zinaₖtiv, d.h. steht nicht im Eingriff mit der gemeinsamen Stelleinrichtung 19. Die Spanneinheit 18 des dahinter liegenden (verdeckten) Messers 8 befindet sich dagegen im aktiven Zustand Zₐₖₜᵢᵥ, da diese im hinteren Bereich so angehoben ist, dass sich deren Druckkopf 25 im Bereich der Mulde 28 der gemeinsamen Stelleinrichtung 19 befindet. Eine Bewegung der gemeinsamen Stelleinrichtung 19 in Richtung der Messer 8 hätte ausgehend vom Zustand in Fig. 3 demnach zur Folge, dass sich lediglich das hintere (verdeckte) Messer 8 in die Betriebsposition P_{B} bewegt, während das vordere Messer 8 aufgrund des inaktiven Zustands Zᵢₙₐₖₜᵢᵥ der zugehörigen Spanneinheit 18 in der Außerbetriebsposition P_{A} verbleibt.

Zur Bewegung einzelner Spanneinheiten 18 vom inaktiven in den aktiven Zustand dient im gezeigten Ausführungsbeispiel der Erfindung eine parallel zur Messerachse 17 verlaufende drehbare Nockenwelle 22, die über die Breite der Schneidvorrichtung 16 mit einer Vielzahl von Nockenelementen 23 versehen ist. Die Nockenwelle 22 ist drehbar unterhalb der Spanneinheiten 18 gelagert. Abhängig von der Drehstellung der Nockenwelle 22 geraten einzelne Nockenelemente 23 mit Kontaktabschnitten der Spanneinheiten 18 (insbesondere mit Außenbereichen der Spiralfedern 27) in Kontakt und heben dann die jeweilige Spanneinheit 18 an, um diese von einer in der Zeichnung etwa waagerechten Lage (entsprechend dem inaktiven Zustand Zᵢₙₐₖₜᵢᵥ) in eine zur gemeinsamen Stelleinrichtung 19 leicht ansteigende Lage (entsprechend dem aktiven Zustand Zₐₖₜᵢᵥ) anzuheben. Umgekehrt bewirkt die Lage der Spanneinheiten 18 oberhalb der Nockenwelle 22, dass eine nicht von einem Nockenelement 23 angehobene Spanneinheit 18 schwerkraftbedingt zurück in den inaktiven Zustand Zᵢₙₐₖₜᵢᵥ zurückfällt, wenn diese nicht unter Spannung durch die gemeinsame Stelleinrichtung 19 steht.

In Fig. 4 ist ein Zustand der Schneidvorrichtung 16 gezeigt, bei dem die Spanneinheit 18 des vorderen Messers 8 aktiviert wurde und deren Druckkopf 25 im Eingriff mit der bereits in Richtung Messer 8 nach vorn bewegten gemeinsamen Stelleinrichtung 19 steht, so dass das vordere Messer 8 in der Betriebsposition P_{B} gehalten wird. Es ist zu sehen, dass aufgrund der Bewegung der gemeinsamen Stelleinrichtung 19 in Richtung Messer 8 die Spanneinheit 18 leicht vom zugehörigen Nocken 23 der Nockenwelle 22 abgehoben ist. Die untere Spiralfeder 27 der Spanneinheit 18 steht also nicht mehr in Kontakt mit dem Nocken 23, wodurch vorteilhaft auch kein Reibverschleiß (z.B. verursacht durch Vibrationen oder Stellbewegungen) an den betroffenen Bauteilen auftritt.

Abhängig von der Anzahl, Anordnung und Form der Nockenelemente 23 auf der Nockenwelle 22 lässt sich allein durch Drehung der Nockenwelle 22 eine jeweils unterschiedliche Auswahl von Messern 8 treffen, die durch eine Zustellbewegung der Stelleinrichtung 19 von der Außerbetriebsposition P_{A} in die Betriebsposition P_{B} verbracht werden. Gleichzeitig wird eine flache Bauweise der Schneidvorrichtung 16 erreicht. Auf vorteilhafte Weise werden dabei stets nur die Spanneinheiten 18 von der gemeinsamen Stelleinrichtung 19 mitgenommen - und somit gespannt -, die per Auswahl aktiviert wurden. Übrige nicht aktivierte Spanneinheiten 18 verbleiben in deren waagerechter Ruheposition.

**Bezugszeichenliste**

| | | | |
|---|---|---|---|
| 1 | Ballenpresse | 28 | Mulde |
| 2 | Erntegut | 29 | Stellhebel |
| 3 | Ballen | 30 | Schwenkachse |
| 4 | Niederhalterollen | 31 | Rolle |
| 5 | Aufsammeltrommel | 32 | Schneidkante |
| 6 | Förderorgan | 33 | Stellzylinder |
| 7 | Rotor | 34 | rückseitiger Abschnitt |
| 8 | Messer | | |
| 9 | Zuführkanal | P_{A} | Au βerbetriebsposition |
| 10 | Raffer | P_{B} | Betriebsposition |
| 11 | Presskammer | Zₐₖₜᵢᵥ | aktiver Zustand |
| 12 | Knoteinrichtung | Zᵢₙₐₖₜᵢᵥ | inaktiver Zustand |
| 13 | Hauptgetriebe | | |
| 14 | Hauptantriebswelle | | |
| 15 | Zugdeichsel | | |
| 16 | Schneidvorrichtung | | |
| 17 | Messerachse | | |
| 18 | Spanneinheit | | |
| 19 | Stelleinrichtung | | |
| 20 | Rahmen | | |
| 21 | Auswählmechanismus | | |
| 22 | Nockenwelle | | |
| 23 | Nocken | | |
| 24 | Stößel | | |
| 25 | Druckkopf | | |
| 26 | Fußabschnitt | | |
| 27 | Spiralfeder | | |

## Patentansprüche

1. Schneidvorrichtung (16) für landwirtschaftliches Erntegut (2), insbesondere zur Verwendung an einer Ballenpresse (1) oder einem Ladewagen, mit einer Anzahl von Messern (8), die in Bezug auf einen von Erntegut (2) durchströmten Kanal (9) in Reihe nebeneinander angeordnet und um eine sich quer zum Kanal (9) erstreckende Messerachse (17) jeweils zwischen einer Außerbetriebsposition (P_{A}) und einer Betriebsposition (P_{B}) verschwenkbar sind, und den Messern (8) zugeordneten Spanneinheiten (18), die im Eingriff mit einer gemeinsamen Stelleinrichtung (19) bewegbar sind, um die Messer (8) von der Außerbetriebsposition (P_{A}) in die Betriebsposition (P_{B}) zu verschwenken, **gekennzeichnet durch** einen den Spanneinheiten (18) zugeordneten gemeinsamen Auswählmechanismus (21), der ausgewählte Spanneinheiten (18) von einem inaktiven Zustand (Zᵢₙₐₖₜᵢᵥ), in dem diese ohne Eingriff mit der gemeinsamen Stelleinrichtung (19) sind, in einen aktiven Zustand (Zₐₖₜᵢᵥ) bewegen kann, in dem diese mit der gemeinsamen Stelleinrichtung (19) in Eingriff stehen.

2. Schneidvorrichtung nach Anspruch 1, **dadurch gekennzeichnet, dass** der Auswählmechanismus (21) eine zur Messerachse (17) parallele Nockenwelle (22) umfasst, die zu Kontaktabschnitten der Spanneinheiten (18) derart beabstandet ist, dass abhängig von der Drehstellung der Nockenwelle (22) ausgewählte Spanneinheiten (18) bei Kontakt mit einem Nocken (23) vom inaktiven (Zᵢₙₐₖₜᵢᵥ) in den aktiven Zustand (Zₐₖₜᵢᵥ) ausgelenkt werden.

3. Schneidvorrichtung nach Anspruch 1 oder 2, **dadurch gekennzeichnet, dass** eine Spanneinheit (18) jeweils einen Stößel (24) umfasst, der einen mit der Stelleinrichtung (19) in Eingriff bringbaren Druckkopf (25) und einen mittelbar oder unmittelbar auf das jeweilige Messer (8) Druck übertragenden Fußabschnitt (26) aufweist.

4. Schneidvorrichtung nach Anspruch 3, **dadurch gekennzeichnet, dass** der Stößel (24) liegend und oberhalb der Nockenwelle (22) angeordnet ist, so dass die Auswahl einer Spanneinheit (18) in den aktiven Zustand (Zₐₖₜᵢᵥ) bei Kontakt mit einem Nocken (23) in Form eines Anhebens erfolgt und sich der inaktive Zustand (Zᵢₙₐₖₜᵢᵥ) durch schwerkraftbedingtes Absenken ergibt.

5. Schneidvorrichtung nach Anspruch 3 oder 4, **dadurch gekennzeichnet, dass** der Stößel (24) mittels einer zwischen Druckkopf (25)und Fußabschnitt (26) wirkenden Federanordnung (27) in dessen Länge veränderlich ist.

6. Schneidvorrichtung nach einem der Ansprüche 3 bis 5, **dadurch gekennzeichnet, dass** im aktiven Zustand (Zₐₖₜᵢᵥ) einer Spanneinheit (18) der Druckkopf (25) des Stößels (24) mit einer an der Stelleinrichtung (19) dazu komplementär ausgebildeten Mulde (28) in Eingriff steht.

7. Schneidvorrichtung nach einem der Ansprüche 1 bis 6, **dadurch** gekennzeichnet, **dass** eine Spanneinheit (18) einen drehbar gelagerten Stellhebel (29) umfasst, dessen freies Ende mit dem Fußabschnitt (26) des Stößels (24) gekoppelt ist und mit einem rückseitigen Abschnitt des Messers (8) in Druckkontakt bringbar ist, um dieses von der Außerbetriebsposition (P_{A}) in die Betriebsposition (P_{B}) zu drücken und/oder in der Betriebsposition (P_{B}) zu halten.

8. Ballenpresse (1) oder Ladewagen mit einer im Erntegutkanal (9) angeordneten Schneidvorrichtung (16) nach einem der Ansprüche 1 bis 7.

## Claims

1. A cutting apparatus (16) for agricultural crop material (2), in particular for use on a bale press (1) or a loading wagon, comprising a number of blades (8) which are arranged in a row in mutually juxtaposed relationship in relation to a passage (9) through which crop material (2) flows and which are respectively pivotable about a blade axis (17) extending transversely relatively to the passage (9) between an inoperative position (P_{A}) and an operative position (P_{B}), and clamping units (18) which are associated with the blades (8) and which are movable in engagement with a common adjusting device (19) to pivot the blades (8) from the inoperative position (P_{A}) into the operative position (P_{B}), **characterised by** a common selecting mechanism (21) which is associated with the clamping units (18) and which can move selected clamping units (18) from an inactive condition (Zᵢₙₐₖₜᵢᵥ) in which they are without engagement with the common adjusting device (19) into an active condition (Zₐₖₜᵢᵥ) in which they are in engagement with the common adjusting device (19).

2. A cutting apparatus according to claim 1 **characterised in that** the selecting mechanism (21) includes a cam shaft (22) which is parallel to the blade axis (17) and which is spaced relative to contact portions of the clamping units (18) in such a way that in dependence on the rotary position of the cam shaft (22) selected clamping units (18) are deflected from the inactive condition (Zᵢₙₐₖₜᵢᵥ) into the active condition (Zₐₖₜᵢᵥ) upon contact with a cam (23).

3. A cutting apparatus according to claim 1 or claim 2 **characterised in that** a clamping unit (18) respectively includes a pushrod (24) which has a pressure head (25) which can be brought into engagement with the adjusting device (19) and a foot portion (26) which transmits pressure to the respective blade (8) directly or indirectly.

4. A cutting apparatus according to claim 3 **characterised in that** the pushrod (24) is arranged lying and above the cam shaft (22) so that the selection of a clamping unit (18) into the active condition (Zₐₖₜᵢᵥ) occurs upon contact with a cam (23) in the form of a lifting movement and the inactive condition (Zᵢₙₐₖₜᵢᵥ) is afforded by gravity-induced downward movement.

5. A cutting apparatus according to claim 3 or claim 4 **characterised in that** the pushrod (24) is variable in its length by means of a spring arrangement (27) operative between the pressure head (25) and the foot portion (26).

6. A cutting apparatus according to one of claims 3 to 5 **characterised in that** in the active condition (Zₐₖₜᵢᵥ) of a clamping unit (18) the pressure head (25) of the pushrod (24) is in engagement with a recess (28) of a configuration complementary thereto on the adjusting device (19).

7. A cutting apparatus according to one of claims 1 to 6 **characterised in that** a clamping unit (18) includes a rotatably mounted adjusting lever (29) whose free end is coupled to the foot portion (26) of the pushrod (24) and can be brought into pressure contact with a rear-side portion of the blade (8) in order to push it from the inoperative position (P_{A}) into the operative position (P_{B}) and/or to hold it in the operative position (P_{B}).

8. A bale press (1) or loading wagon having a cutting apparatus (16) according to one of claims 1 to 7 arranged in the crop material passage (9).

## Revendications

1. Dispositif de coupe (16) pour un produit de récolte agricole (2), destiné en particulier à être utilisé sur une presse à balles (1) ou une remorque autochargeuse, comportant un certain nombre de lames (8) qui sont disposées les unes à côté des autres en une rangée par rapport à un canal (9) traversé par le produit de récolte (2) et qui peuvent pivoter autour d'un axe de lames (17) s'étendant transversalement au canal (9) entre une position hors service (P_{A}) et une position de service (P_{B}), et des unités de tension (18) associées aux lames (8), qui peuvent être déplacées pour être mises en prise avec un dispositif de réglage commun (19) pour faire pivoter les lames (8) de la position hors service (P_{A}) vers la position de service (P_{B}), **caractérisé par** un mécanisme de sélection commun (21) associé aux unités de tension (18), qui peut déplacer des unités de tension (18) sélectionnées d'un état inactif (Z_{inactif}), dans lequel celles-ci ne sont pas en prise avec le dispositif de réglage commun (19), vers un état actif (Z_{actif}) dans lequel celles-ci sont en prise avec le dispositif de réglage commun (19).

2. Dispositif de coupe selon la revendication 1, **caractérisé en ce que** le mécanisme de sélection (21) comprend un arbre à cames (22) parallèle à l'axe de lames (17), qui est éloigné de parties de contact des unités de tension (18), de sorte qu'en fonction de la position de rotation de l'arbre à cames (22) des unités de tension (18) sélectionnées sont déplacées de l'état inactif (Z_{inactif}) vers l'état actif (Z_{actif}) en cas de contact avec une came (23).

3. Dispositif de coupe selon la revendication 1 ou 2, **caractérisé en ce que** chaque unité de tension (18) comprend un poussoir (24) qui présente une tête de pression (25) pouvant être mise en prise avec le dispositif de réglage (19), et une partie pied (26) transmettant la pression directement ou indirectement à la lame (8) respective.

4. Dispositif de coupe selon la revendication 3, **caractérisé en ce que** le poussoir (24) est disposé horizontalement au-dessus de l'arbre à cames (22), de sorte que la sélection d'une unité de tension (18) dans l'état actif (Z_{actif}) en cas de contact avec une came (23) s'effectue sous la forme d'un soulèvement, et que l'état inactif (Z_{inactif}) résulte d'un abaissement par gravité.

5. Dispositif de coupe selon la revendication 3 ou 4, **caractérisé en ce que** la longueur du poussoir (24) est variable au moyen d'un agencement à ressort (27) agissant entre la tête de pression (25) et la partie pied (26).

6. Dispositif de coupe selon l'une des revendications 3 à 5, **caractérisé en ce que**, dans l'état actif (Z_{actif}) d'une unité de tension (18), la tête de pression (25) du poussoir (24) est en prise avec un creux (28) complémentaire à celle-ci formé sur le dispositif de réglage (19).

7. Dispositif de coupe selon l'une des revendications 1 à 6, **caractérisé en ce qu'**une unité de tension (18) comprend un levier de réglage (29) monté rotatif dont l'extrémité libre est couplée à la partie pied (26) du poussoir (24) et peut être mise en contact de pression avec une partie arrière de la lame (8) afin de presser celle-ci de la position hors service (P_{A}) vers la position de service (P_{B}) et/ou de la maintenir dans la position de service (P_{B}).

8. Presse à balles (1) ou remorque autochargeuse dotée d'un dispositif de coupe (16) selon l'une des revendications 1 à 7, disposé dans le canal de produit de récolte (9).
